# EUROPEAN PATENT APPLICATION

(11) **EP 2 889 215 A1**
(43) Date of publication of application: **01.07.2015**
(21) Application number: 13382564.6
(22) Date of filing: 27.12.2013
(51) Int. Cl.: B64C 5/02, B64C 3/18, B64C 3/24

(54) **Horizontal tail plane of an aircraft**

(71) Applicant: Airbus Operations S.L., 28906 Madrid (ES)
(72) Inventor: Marasco, Andrea Ivan, 28906 Getafe (ES); Pereira Mosqueira, Fernando, 28906 Getafe (ES); Guinaldo Fernández, Enrique, 28906 Getafe (ES); García Nieto, Carlos, 28906 Getafe (ES); Honorato Ruiz, Francisco Javier, 28906 Getafe (ES); Cruz Domínguez, Francisco José, 28906 Getafe (ES)
(74) Representative: Elzaburu S.L.P.

(57) **Abstract**

Horizontal tail plane of an aircraft which comprises a single torsion box which also comprises a front spar (1), a rear spar (2), an upper cover and a lower cover, ribs and two closing ribs (3), the front spar (1), the rear spar (2) and the upper and lower covers extending between said two closing ribs (3) and along the whole span of the horizontal tail plane in a symmetric layout with respect to the symmetry axis of the aircraft.

## Description

### FIELD OF THE INVENTION

The present invention refers to an optimized layout of structural elements, specifically covers, ribs, spars and stringers in a torsion box of a trimmable horizontal tail plane.

### BACKGROUND OF THE INVENTION

Known horizontal tail planes (HTP) comprise right and left torsion boxes, both structures being joined by means of a central torsion box or by means of a central joint. Said torsion boxes comprise external and internal elements. The external elements of each torsion box are front spar and rear spars, two closing ribs and upper and lower covers. The known internal elements of each torsion box are:
- Intermediate spars which are distributed along the span of the torsion box between the front and the rear spars.
- Intermediate ribs which are distributed along the chord of the torsion box and could extend between the front and the rear spars.
- Central spars, located in the central box of the HTP which are elements parallel to the aircraft Y plane and perpendicular to the longitudinal axis of the aircraft.
- Stringers which are joined to the upper and lower covers and distributed along the span of the torsion box.

Known horizontal tail planes have supporting points which are described as follows:
- Two points acting as pivot interfaces which act as supports reacting loads. The axis joining these two elements is the pivot axis.
- One point acting as a jack fitting interface which is a load introduction area which allows the horizontal tail plane to be trimmable.
- In addition to these supporting points, there are two zones acting as actuator interfaces which are also load introduction areas as they react the loads generated by the control surfaces, for instance, the elevators.

Known technical solutions applied to torsion boxes and lifting surfaces comprising the previously described elements and receiving the previously described loads are the pure multirib torsion box structure and the pure multispar torsion box structure.

Pure multirib torsion box structures comprise a forward spar, a rear spar, ribs and upper and lower covers and pure multispar torsion box structures comprise a forward spar, a rear spar, intermediate spars, upper and lower covers and also ribs located next to the load introduction areas.

The aim of the invention is to achieve weight savings and manufacturing improvements with respect to conventional multirib or multispar right and left torsion box concepts.

### SUMMARY OF THE INVENTION

The claimed horizontal tail plane provides advantages in terms of manufacturing and weight saving over the state of the art.

The horizontal tail plane object of the invention comprises a single torsion box which comprises a front and rear spars, upper and lower covers and two closing ribs, the front spar, the rear spar and the upper and lower covers extending between said two closing ribs and along the whole span of the horizontal tail plane in a symmetric layout with respect to the symmetry axis or longitudinal axis of the aircraft.

Therefore said single torsion box comprises elements, ie, front and rear spars and upper and lower covers extending between the two closing ribs. In the context of this invention the element extends along the whole span of the HTP although said element could be split into several subelements for manufacturing purpose that are afterwards joined together in a continuous manner. It also means that the horizontal tail plane does not comprise an intermediate central box or an intermediate joint located in the central part for joining a right and a left torsion boxes.

The resulting engineered structure is neither a pure multirib or a multispar architecture as it combines both philosophies. Another novelty of the invention is that the spars are not purely straight as they are kinked next to the central zone of the HTP. Upper and lower covers can be a one piece element or can be split into two upper and two lower covers.

Another advantage of the claimed invention is that it saves cost by using a smaller amount of elements

### DESCRIPTION OF THE FIGURES

To complete the description and in order to provide for a better understanding of the invention, a set of drawings is provided. Said drawings form an integral part of the description and illustrate preferred embodiments of the invention. The drawings comprises the following figures.
Figure 1 is a schematic plan view of an embodiment of the invention.
Figure 2 is a schematic perspective view of the embodiment shown in Figure 1.

### DETAILED DESCRIPTION OF THE INVENTION

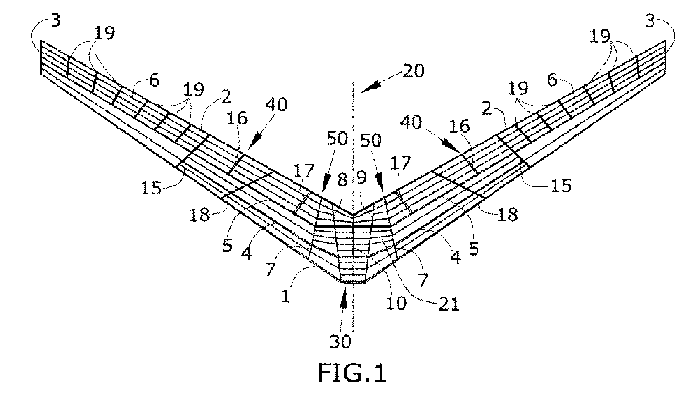

Figure 1 shows an embodiment of the invention. The external or boundary elements are the following:
- A front spar (1) extending spanwise along the whole lenght of the horizontal tail plane, comprising a central portion perpendicular to the symmetry axis (20) of the aircraft and two lateral portions symmetric with respect to said symmetry axis (20) and forming an obtuse angle with the central portion.
- A rear spar (2) also extending spanwise along the whole lenght of the horizontal tail plane, comprising two lateral portions symmetric with respect to the symmetry axis (20) and forming an obtuse angle with said axis.
- Two closing ribs (3).
- Upper and lower covers (not represented) extending spanwise along the whole lenght of the horizontal tail plane. The upper and lower covers can be a whole element or can be split into panels.

It also comprises intermediate spars (4, 5) which are distributed along the whole span of the HTP between the front (1) and rear (2) spars. The first intermediante spar (5) extends between the closing ribs (3) in a symmetric layout with respect to the symmetry axis (20) of the aircraft.

The spars (1, 2, 4, 5) comprises straight portions having different orientations distributed in a symmetric layout with respect to the symmetry axis (20) of the aircraft. The changes of orientation between said portions of the spars (1, 2, 4, 5) are performed at their crossing with a rib (7, 8, 9, 10).

The embodiment of the horizontal tail plane shown in Figure 1 also has the following three supporting points, as known in conventional horizontal tail planes:
- Two zones acting as pivot supporting points (50) which act as supports reacting loads. The axis joining these two elements is the pivot axis (not shown).
- One zone acting as the jack fitting interface (30) which is a load introduction area which allows the horizontal tail plane to be trimmable.
- In addition to these supporting points, thre are two zones acting as actuator interfaces (40) which are also load introduction areas as they react the loads generated by the control surfaces, for instance, the elevators.

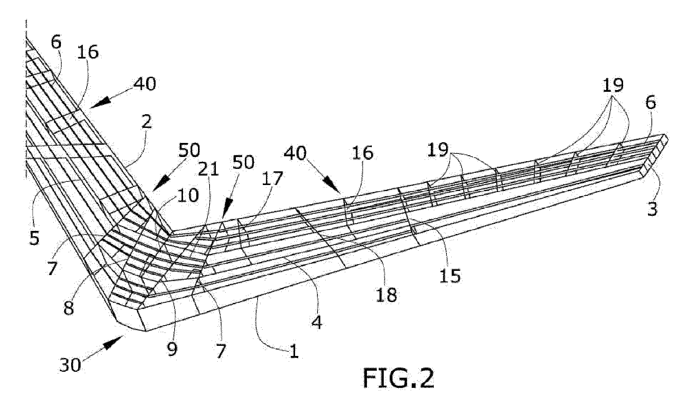

The embodiment shown in Figures 1 and 2 comprises ribs extending from the supporting points (50, 30) and the actuators interface (40). Ribs of the embodiments shown in Figures 1 and 2 can be full-chord ribs which are ribs which join both front (1) and rear (2) spars or non-full-chord ribs which are ribs which extend from the front (1) or the rear (2) spar to an intermediate spar (4, 5).

The front spar (1) and the intermediate spars (4, 5) shown in Figures 1 and 2 comprise at least a central portion perpendicular to the symmetry axis (20) of the aircraft and two lateral portions symmetric with respect to said symmetry axis (20) and forming an obtuse angle with the central portion.

The horizontal tail plane of the embodiment also comprises stringers (6) which are spanwise distributed elements placed on the upper and lower covers and which extend between the two closing ribs (3) along the whole span of the horizontal tail plane. Therefore, the stringers (6) extend between the closing ribs (3) and along the whole span of the horizontal tail plane in a symmetric layout with respect to the symmetry axis (20) the aircraft.

It also comprises two intermediate ribs (15) extending between the rear (2) and the front (1) spars at both sides of the symmetry axis (20) of the aircraft and located at a distance of 50±10% of the length of half the span measured along the rear spar plane from the symmetry axis (20) of the aircraft of the horizontal tail plane.

The claimed layout is the result of an optimization which takes into account the most relevant sizing load cases, maximum and minimum vertical bending, maximum and minimum torsion and maximum asymmetric vertical bending.

The elements forming the torsion box structure are arranged such that follow, as closely as possible, the predominant load paths also having a manufacturable structure. The resulting engineered structure which could be manufactured with today's technologies using known carbon fibre reinforced plastic materials and processes, provides a significant weight saving.

In order to better describe the embodiment of the invention the description will be divided into three zones, central zone and two lateral zones.

### Central zone

The central zone is delimited by the two intermediate full-chord ribs or pivot ribs (7) extending from the pivot supporting points (50) which are significantly loaded areas. More specifically the angle of the pivot ribs (7) with respect to the rear spar (2) may vary between 90º and the resulting value of the angle of the rear spar (2) with respect to the symmetry axis (20) of the aircraft, ie, the pivot rib (7) parallel to said axis.

Within this central zone there are three ribs (8, 9, 10). Two of the ribs called intermediate center ribs (8, 9) are placed next to the pivot ribs (7). The three ribs (8, 9, 10) are placed between the two pivot ribs (7). Intermediate center ribs (8, 9) improve the load transition between the rear spar (2) zone and horizontal tail plane jack fitting supporting point (30).

The third rib is the center rib (10). The center rib (10) is an non-full-chord intermediate rib which extends between the rear spar (2) and the additional intermediate central spar (4) along the symmetry axis (20) of the aircraft.

Loads at the horizontal tail plane symmetry axis (20) are mainly distributed to the rear spar (2) area. Due to this fact, the center rib (10) configuration appears as shown, that is, not joining the rear spar (2) and the jack fitting (30).

In the central zone the intermediate spars (4, 5) are kinked looking for a proper load transition between central and lateral zones of the horizontal tail plane. The central portion of the intermediate spar (5) located close to the rear spar (2) extends between both pivot ribs (7). Said central portion of said intermediate spar (5) is located at a distance measured from the rear spar (2) between 15% and 30% of the distance between the rear spar (2) and the front spar (1).

The first kink between the central portion and the lateral parts of the intermediate spar (4) located closer to the front spar (1) is performed at its crossing with the pivot ribs (7) and a second kink is performed at its crossing with the center ribs (8, 9). Said central portion of said intermediate spar (4) is located at a distance measured from the rear spar (2) between 60% and 75% of the distance between the rear spar (2) and the front spar (1).

The central zone also comprises stiffeners (21) located spanwise and extending between the two pivot ribs (7). The stifferners (21) comprises a kink at their crossing with the center ribs (8, 9).

### Lateral zone

Each lateral zone extends from the corresponding pivot rib (7) to the corresponding closing rib (3).

The additional intermediate spar (4) extends between the two intermediate ribs (15) along the whole span of the horizontal tail plane and is located between the intermediate spar (5) and the front spar (1).

The angle between the lateral portions of the intermediate spars (4, 5) and the rear spar (2) is between 0º and 10º.

Both intermediate spars (4, 5) increase the horizontal tail plane bending inertia and prevent covers' buckling modes affecting entire bays.

Within this zone there is also a distribution of intermediate ribs. The first rib described is the actuator rib (16), which is an intermediate non-full-chord rib which connects the rear spar (2) at the actuator interface (40) with the intermediate spar (5). The angle of this element with respect to the rear spar (2) varies between 80º and 100º.

In a similar way, there is another additional intermediate non-full-chord rib (17) placed next to the pivot rib (7) and extending between the rear spar (2) and the intermediate spar (5) in order to reinforce this zone due to the punctual load introduction area at the pivot interface (50). The distance between these two ribs (16, 17) is between 200 mm and 400 mm measured parallel to the corresponding rear spar (2). The angle of this element (16, 17) with respect to the rear spar (2) may vary between 90º ±10º.

Between these two intermediate ribs (16, 17) there is a full-chord oblique rib (18) with the purpose of giving overall stability to the area. This is achieved by locating the oblique rib (18) in the optimum load path for horizontal tail plane asymmetric load cases. The angle of this oblique rib (18) with respect to the rear spar (2) may vary between 60º ±10º and it is located between the actuator rib (16) and the additional intermediate rib (17) and extending between the front spar (1) and the rear spar (2).

In addition to this, there is the full-chord intermediate rib (15) which has an angle with respect to the rear spar (2) that may vary between 75º and 105º. This intermediate rib (15) limits the additional intermediate spar (4).

Between this full-chord intermediate rib (15) and the closing rib (3) there is a set of non-full-chord intermediate ribs (19) distributed between the intermediate spar (5) and the rear spar (2). The amount of ribs (19) may vary with the horizontal tail plane span as their distribution is driven by buckling, tip deformation and interfaces load introduction points.

Stringers (6) are also spanwise distributed elements extending between the closing ribs (3) and along the whole span of the horizontal tail plane.

Stringer layout (6) is conical between continuous spars, which means that stringers (6) located between two spars have a conical configuration with respect to those spars. This configuration determines an optimal bending stiffness depending on the load distribution.

The resulting structure is neither pure multirib nor multispar architecture as it combines both philosophies and adds some new features:
- An optimized spar distribution.
- Spars are not purely straight, they have kinks or orientation changes in the central zone.
- Stringers are not purely straight, they have kinks in the central zone.
- Oblique ribs.
- Ribs not joining the front (1) and the rear (2) spars.
- A non full-chord center rib.

## Claims

1. Horizontal tail plane of an aircraft, **characterised in that** it comprises a single torsion box which comprises a front (1) and rear (2) spars, an upper a lower cover, two closing ribs (3), the front spar (1), the rear spar (2) and the upper and lower covers extending between said two closing ribs (3) and along the whole span of the horizontal tail plane in a symmetric layout with respect to the symmetry axis (20) of the aircraft.

2. Horizontal tail plane, according to claim 1, wherein it comprises an intermediate spar (5) located between the front (1) and the rear (2) spars, said intermediate spar (5) extending between the closing ribs (3) and along the whole span of the horizontal tail plane in a symmetric layout with respect to the symmetry axis (20) of the aircraft.

3. Horizontal tail plane, according to any preceding claim, wherein it comprises two intermediate ribs (15) extending between the rear (2) and the front (1) spars at both sides of the symmetry axis (20) of the aircraft and located at a distance of 50±10% of the length of half the span measured along the rear spar plane from the symmetry axis (20) of the aircraft of the horizontal tail plane.

4. Horizontal tail plane, according to claim 3, wherein the intermediate rib (15) forms an angle that vary between 75º and 105º with respect to the rear spar (2).

5. Horizontal tail plane, according to claim 2 and 4, wherein it comprises an additional intermediate spar (4) which extends between the two intermediate ribs (15) along the whole span of the horizontal tail plane, the additional intermediate spar (4) being located between the intermediate spar (5) and the front spar (1).

6. Horizontal tail plane, according to claim 5, wherein it comprises a center rib (10) extending between the rear spar (2) and the additional intermediate spar (4) along the symmetry axis (20) of the aircraft.

7. Horizontal tail plane, according to claims 5 or 6, wherein the spars (1, 2, 4, 5) comprises straight portions having different orientations distributed in a symmetric layout with respect to the longitudinal axis of the aircraft.

8. Horizontal tail plane, according to claim 7, wherein the kink between said portions/segments of the spars (1, 2, 4, 5) is performed at their crossing with a rib (7, 8, 9, 10).

9. Horizontal tail plane, according to any preceding claim from 2 to 8, wherein it also comprises jack fitting supporting points (30) located in the front spar (1), two pivot supporting points (50) and two actuator interfaces (40) located in the rear spar (2), two pivot ribs (7) which are full-chord ribs extending from the pivot supporting points (50) to the front spar (1), two intermediate center ribs (8, 9) extending between the jack fitting supporting points (30) and the rear spar (2) and which are placed between the pivot ribs (7) and the symmetry axis of the aircraft and two actuator ribs (16) extending from the actuator interfaces (40) to the intermediate spars (5).

10. Horizontal tail plane, according to any preceding claim from 5 to 9, wherein it comprises a center rib (10) extending between the rear spar (2) and the additional intermediate central spar (4) along the symmetry axis.

11. Horizontal tail plane, according to any preceding claim from 2 to 10, wherein it comprises an additional intermediate rib (17) extending between the rear spar (2) and the intermediate spar (5).

12. Horizontal tail plane, according to claims 9 and 11, wherein the angle of the actuator rib (16) and the additional intermediate rib (17) with respect to the rear spar (2) vary between 90º ±10º.

13. Horizontal tail plane, according to claim 12, wherein it comprises an oblique rib (18) located between the actuator rib (16) and the additional intermediate rib (17) and extending between the front spar (1) and the rear spar (2).

14. Horizontal tail plane, according to claim 13, wherein the angle of the oblique rib (18) with respect to the rear spar (2) vary between 60º ±10º.

15. Horizontal tail plane, according to any preceding claim, wherein it comprises stringers (6) located between the front (1) and the rear (2) spars and extending between the closing ribs (3) and along the whole span of the horizontal tail plane in a symmetric layout with respect to the symmetry axis (20) of the aircraft.
